# EUROPEAN PATENT SPECIFICATION

(11) **EP 4 558 749 B1**
(45) Date of publication and mention of the grant of the patent: **04.11.2026**
(21) Application number: 23758515.3
(22) Date of filing: 10.08.2023
(51) Int. Cl.: F16L 11/08, B21C 37/12, F16L 11/16

(54) **PIPE WITH SMOOTHING INSERT AND MANUFACTURING METHOD**
ROHR MIT GLÄTTUNGSEINSATZ UND HERSTELLUNGSVERFAHREN
TUYAU AVEC INSERT DE LISSAGE ET METHODE DE FABRICATION

(30) Priority: 16.08.2022 GB 202211965
(43) Date of publication of application: 28.05.2025
(73) Proprietor: Baker Hughes Energy Technology UK Limited, Bristol BS48 1BS (GB)
(72) Inventor: CLEMENTS, Richard, Newcastle Upon Tyne NE63PF (GB)
(74) Representative: Novagraaf Group
(86) International application number: PCT/EP2023/025373
(87) International publication number: WO 2024/037732

(56) References cited:
- WO-A1-02/42673
- WO-A1-2014/167346
- FR-A1- 3 017 439

## Description

The present invention relates to a method and apparatus for helping to smooth a bore of a flexible pipe. In particular, but not exclusively, the present invention relates to an insert for smoothing a radially inner surface of a carcass tape that is helically wound during manufacture of flexible pipe body.

Traditionally flexible pipe is utilised to transport production fluids, such as oil and/or gas and/or water, from one location to another. Flexible pipe is particularly useful in connecting a sub-sea location (which may be deep underwater, say 1000 metres or more) to a sea level location. The pipe may have an internal diameter of typically up to around 0.6 metres (e.g. diameters may range from 0.05 m up to 0.6 m). A flexible pipe is generally formed as an assembly of flexible pipe body and one or more end fittings. The pipe body is typically formed as a combination of layered materials that form a pressure-containing conduit. The pipe structure allows large deflections without causing bending stresses that impair the pipe's functionality over its lifetime. There are different types of flexible pipe such as unbonded flexible pipe which is manufactured in accordance with API 17J or composite type flexible pipe or the like. The pipe body is generally built up as a combined structure including polymer layers and/or composite layers and/or metallic layers. For example, pipe body may include polymer and metal layers, or polymer and composite layers, or polymer, metal and composite layers. Layers may be formed from a single piece such as an extruded tube or by helically winding one or more wires at a desired pitch or by connecting together multiple discrete hoops that are arranged concentrically side-by-side. Depending upon the layers of the flexible pipe used and the type of flexible pipe some of the pipe layers may be bonded together or remain unbonded.

Some flexible pipe has been used for deep water (less than 3,300 feet (1,005.84 metres)) and ultra-deep water (greater than 3,300 feet) developments. It is the increasing demand for oil which is causing exploration to occur at greater and greater depths (for example in excess of 8202 feet (2500 metres)) where environmental factors are more extreme. For example in such deep and ultra-deep water environments ocean floor temperature increases the risk of production fluids cooling to a temperature that may lead to pipe blockage. In practice flexible pipe conventionally is designed to perform at operating temperatures of -30°C to +130°C, and is being developed for even more extreme temperatures. Increased depths also increase the pressure associated with the environment in which the flexible pipe must operate. For example, a flexible pipe may be required to operate with external pressures ranging from 0.1 MPa to 30 MPa acting on the pipe. Equally, transporting oil, gas or water may well give rise to high pressures acting on the flexible pipe from within, for example with internal pressures ranging from zero to 140 MPa from bore fluid acting on the pipe. As a result the need for high levels of performance from certain layers such as a pipe carcass or a pressure armour or a tensile armour layer of the flexible pipe body is increased. It is noted for the sake of completeness that flexible pipe may also be used for shallow water applications (for example less than around 500 metres depth) or even for shore (overland) applications.

Conventionally flexible pipe body may be constructed with a carcass layer as a radially innermost layer, in so-called "rough bore" operation. The carcass layer is a collapse resistant layer that helps support a fluid barrier layer. A helical gap between carcass tape windings can cause production fluid flow rates to decrease because the speed of the fluid at the outer limit of the bore is slowed by fluid entering and escaping these gaps. Likewise adjacent repeats of the gap along a length of the pipe body can cause fluid induced pulsation (FLIP) which can give rise to "Singing" under certain circumstances. Folded tape inserts or multi component inserts have been proposed to help cover the gap and may thus be used to help alleviate this. However, due to the size and shape of such folded tapes, fluid may still breach past these inserts into the gaps between carcass windings and impact of fluid flow.

WO 02/42673 A1 discloses a flexible tubular conduit, preferably usable in deep sea. WO 2014/167346 A1 discloses an elongate tape element, a flexible pipe body and method of producing a flexible pipe body.

Likewise some proposed inserts are difficult and/or costly to manufacture on an industrial scale. A further problem arises because increasing a width of the folded tape has the effect that the wider folded tape cannot be wound with a desired overlap during conventional flexible pipe body manufacturing processes. A still further problem is that there has been a feeling in the associated industry that some insert designs have required the insert to be clamped or somehow fixed to adjacent windings of a folded tape used to provide the primary carcass windings. The perception has been that without such a mechanism to "fix" the relative position of windings of the insert tape with respect to the carcass windings the insert tape may become displaced in use and cause a catastrophic failure to the flexible pipe.

It is an aim of the present invention to at least partly mitigate one or more of the above-mentioned problems.

It is an aim of certain embodiments of the present invention to at least partially smooth a bore of a flexible pipe.

It is an aim of certain embodiments of the present invention to fully or at least partially block production fluids flowing in a flexible pipe from entering gaps created by repeated instances of a helical gap between adjacent windings of a carcass tape.

It is an aim of certain embodiments of the present invention to provide flexible pipe body that includes an insert for helping to smooth a bore of a flexible pipe.

It is an aim of certain embodiments of the present invention to provide a method of manufacturing flexible pipe body with an insert for helping to smooth the bore of a flexible pipe.

It is an aim of the certain embodiments of the invention to provide apparatus for manufacturing flexible pipe body with a folded tape that has increased width relative to conventional folded tape inserts.

It is an aim of certain embodiments of the present invention to provide a method of manufacturing flexible pipe body with a folded tape that has increased width relative to conventional folded tape inserts.

It is an aim of certain embodiments of the present invention to provide a windable insert that bridges and thus covers a helical gap formed between adjacent windings or a carcass tape but which does not intrude significantly in a radial direction into the gap and thus plays little role in limiting possible axial play between adjacent carcass tape windings as a flexible pipe flexes.

It is an aim of certain embodiments of the present invention to provide a windable insert and associated method of manufacture that helps locate the insert with respect to a winding of a carcass tape so that the insert will not become disassociated from the carcass windings in use.

It is an aim of certain embodiments of the present invention to provide an insert having a profile that is windable and in which adjacent windings of the insert itself interlock to some extent to help reduce any risk of detachment in use but which also leaves adjacent instances of the insert windings free to slide with respect to each other in use to thereby not unduly effect flexing of the flexible pipe body.

It is an aim of certain embodiments of the present invention to provide a windable insert that can help close a helical gap and which can be manufactured from flat strip folded into a desired cross sectional profile using a carcass winding machine used anyway during manufacture of flexible pipe body.

Disclosed herein is an elongate tape element having a cross-section comprising: a first portion, extending from a first free edge of the elongate tape element corresponding to a first end of a cross section of the elongate tape element, wherein the first portion is curved for locating in a first gap region that extends between two adjacent windings of a carcass tape of flexible pipe body; and a body portion, extending between the first portion and a remaining end of the cross section corresponding to a remaining free edge of the elongate tape element, having a length for bridging a further gap region extending between a one of the two adjacent windings and a further adjacent winding of the carcass tape that is adjacent to said a one of the two adjacent windings of the carcass tape, wherein the body portion comprises an intermediate region that is curved for locating at least partially into the further gap region.

Aptly, the first portion is configured to extend into the first gap region by a distance of between 10% to 50% of a total thickness of a winding of the carcass tape.

Aptly, the first portion has a curved shape that mates with a shape of a curve of a carcass winding at a lift off point where a carcass tape winding bends away from a radially innermost surface of the carcass tape winding.

Aptly, the remaining end of the cross-section of the elongate tape element is upturned for locating at least partially towards a still further gap region, between the further adjacent winding a still further adjacent winding of the carcass tape, and at least partially into a recessed region of an adjacent elongate tape element winding.

Aptly, the intermediate region comprises a single curve having a bell curve profile that has an apex that points away from a primary plane associated with said a cross section in a common direction to a direction in which the first portion turns away from the primary plane.

Aptly, the first portion extends between 5% and 20% of the width of the elongate tape element cross section from the first free edge of the cross section to the remaining free edge of the cross section.

Aptly, a thickness of the cross section of the elongate tape element is no more than 60% of a thickness of the carcass tape, and optionally the thickness of the elongate tape element is less than 35% of the thickness of the carcass tape.

Aptly, an apex of the curve in the intermediate region extends into the further gap by a distance of between 5% and 15% of a total thickness of a winding of the carcass tape.

Aptly, the cross section consists only of the first portion and the body portion and the body portion consists only of a straight region between the first portion and the intermediate region and optionally only a straight region between the intermediate and the remaining end or a straight region extending from the intermediate region and a further curved end of the body portion proximate to the remaining end.

Aptly, the elongate tape element has a cross section that is a cross section that extends between the first and remaining free edge and that is perpendicular to a primary axis of the elongate tape element.

Aptly, the elongate tape element has a cross section that is a cross section in a median axial plane.

Aptly, the elongate tape element has a cross section that has a uniform thickness across a whole of the cross section.

Aptly, elongate tape element is a folded strip of metal that is optionally stainless steel.

Aptly, the elongate tape element body portion is curved proximal to the remaining free edge of the elongate tape element and the curve of the body portion proximal the remaining free edge at least partially matches the curve of the intermediate region.

According to a first aspect of the present invention, there is provided a flexible pipe body, comprising a wound carcass tape element comprising a plurality of carcass windings, adjacent carcass windings being interlocked and providing a gap therebetween; and a helically wound elongate tape element, at least partially interposed between windings of the carcass tape element, having a cross section comprising a first portion, extending from a first free edge of the elongate tape element corresponding to a first end of the cross section, that is curved and at least partially extends into a first gap region that extends between two adjacent windings of the carcass tape, and a body portion, extending between the first portion and a remaining end of the cross section that corresponds to a remaining free edge of the elongate tape element, that bridges a further gap region extending between a one of the two adjacent windings and a further adjacent winding that is adjacent to said a one of the two adjacent windings of the carcass tape; wherein the body portion comprises an intermediate region that is curved and is located at least partially into the further gap region.

Aptly, the first portion of the elongate tape element extends into the first gap region by a distance of between 10% to 50% of a total thickness of a winding of the carcass tape.

Aptly, the remaining end of the elongate tape element cross section is upturned for locating at least partially towards a still further gap region, between the further adjacent winding a still further adjacent winding of the carcass tape, and at least partially into a recessed region of an adjacent elongate tape element winding.

Aptly, the curve of the remaining end of the elongate tape element cross-section at least partially matches the curve of the intermediate region and a curve of a carcass winding at a lift off point as the carcass winding lifts away from a radially innermost extent.

Aptly, the flexible pipe body further comprises an internal polymer barrier layer that provides a fluid barrier and that has a radially inner surface that defines a fluid communicating bore; and at least one armour layer radially outside the barrier layer.

Aptly, the carcass tape is a bent strip, having a uniform thickness across a cross section of the carcass windings, that is folded to provide adjacent windings that can be interlocked; and the elongate tape element is a bent strip, having a uniform thickness across a cross section of the elongate tape, that is folded to provide a cross section comprising the first portion and the body portion.

Aptly, a thickness of the cross section of the elongate tape element is no more than 60% of a thickness of the carcass tape, and optionally the thickness of the elongate tape element is less than 35% of the thickness of the carcass tape.

Aptly, an apex of the curve in the intermediate region of the elongate tape element extends into the further gap by a distance of between 5% and 15% of a total thickness of a winding of the carcass tape.

Aptly, the intermediate region comprises a single curve having a bell curve profile that has an apex that points away from a primary plane associated with said a cross section in a common direction to a direction in which the first portion turns away from the primary plane.

Aptly, the remaining end of the elongate tape element cross section has a curved shape that mates with a shape of a turning region of the intermediate region as the intermediate region turns away from a primary plane associated with said a cross section to thereby enable the further curved end of a winding of the elongate tape element to nest in a recess under an associated intermediate region of an adjacent winding of the elongate tape element.

According to a second aspect of the present invention, there is provided a method of manufacturing flexible pipe body, comprising the steps of: helically winding an elongate tape element on an outer surface of a mandrel member thereby at least partially overlaying an overlying region of the elongate tape element of an incoming elongate tape element winding over a covered region of a preceding elongate tape element winding; helically winding a carcass tape over the mandrel member thereby locating a portion of an incoming carcass winding over at least a region of an already wound winding of the elongate tape element thereby locating a curved first portion of a cross section of the elongate tape element in a first gap region that extends between two adjacent windings of the carcass tape and locating a body portion of the elongate tape element bridging a further gap region extending between a one of the two adjacent windings and a further adjacent winding of the carcass tape that is adjacent to said a one of the two adjacent windings of the carcass tape; and locating an intermediate region of the body portion that is curved at least partially into the further gap region.

Disclosed herein is apparatus for supporting an elongate tape element during manufacture of flexible pipe body, comprising an elongate shaft member comprising an outer surface including a profiled surface region that extends along at least a portion of the shaft member and that has a profiled cross section that comprises repeated flat constant radius cross section regions, provided by a helically extending smooth surface region of the outer surface that lies on an imaginary cylindrical surface coaxial with a central longitudinal axis of the shaft member, disposed between spaced apart tape alignment cross section regions, provided by consecutive repeats of a helically extending variation to the outer surface lying on the imaginary cylindrical surface. Optionally the diameter of the shaft member reduces towards a free end of the shaft member to help gradually release the elongate tape element and overlying carcass tape from the shaft member.

Aptly, each tape alignment cross section region comprises a recessed region or a protruding region or a combination of a recessed region and a protruding region in or from said an outer surface with respect to the imaginary cylindrical surface.

Aptly, the tape alignment cross section region comprises a recess in the outer surface and the variation comprises a helical recess having a common cross section that extends for at least 720 degrees helically and thereby repeatedly along said profiled region of the outer surface of the shaft member.

Aptly, the common cross section of said a recess comprises a first recess end and a further recess end spaced apart from the first recess end, the first recess end comprising an abrupt radially inwardly extending step extending into the outer surface at around 90 degrees to the outer surface of the shaft member adjacent to the first end, and the further recess end comprises a location where an inclined surface of the recess, rising from a bottom of the recess, meets the imaginary cylindrical surface.

Aptly, the common cross section of the recess also comprises a constant radius region that has a constant depth radially inside the imaginary cylindrical surface and that extends from a bottom of the abrupt step to a start of the inclined surface as the inclined surface starts to rise from the bottom of the recess towards the imaginary cylindrical surface.

Aptly, the shaft cross section comprises a cross section of the outer surface of one halfcylinder-like side of the shaft member at a plane passing through and containing the central longitudinal axis of the shaft member.

Aptly, the helically extending variation has a constant cross section and a constant pitch.

Aptly, the elongate shaft member comprises a mandrel supported at least at one end of the mandrel.

Aptly, the apparatus further comprises at least one fluid communication passageway extending axially along and within a respective lubricated region of the shaft member and comprising a passageway portion that extends to the outer surface of the shaft member; and at least one lubrication orifice at the outer surface of the shaft member and at a respective end of a respective passageway portion for selectively providing lubricant at a respective location at an interface region on an outer surface of the elongate shaft member.

Disclosed herein is a method of manufacturing flexible pipe body, comprising the steps of winding an elongate tape element helically around a profiled region of an outer surface of an elongate shaft member as the elongate tape element is wound, orienting a first segment of a tape cross section of the elongate tape element adjacent to a helically extending smooth surface region of the outer surface; and via a helically extending variation to the outer surface, aligning a further segment of the tape cross section oblique to the smooth surface region of the outer surface.

Aptly, the method further comprises winding an incoming winding of the elongate tape element between the outer surface and the further portion of an immediately preceding winding of the elongate tape element.

Aptly, orienting a first segment of the elongate tape element further comprises locating the first segment of the elongate tape element proximate to a helically extending smooth surface region of the outer surface.

Aptly, the method further comprises helically winding a further tape over at least one already wound winding of the elongate tape element thereby locating a first portion of a winding of the elongate further tape element at least partially in a gap between adjacent further tape windings of the further tape and a further portion of an adjacent winding of the elongate tape element that is adjacent to said a winding of the elongate tape element, at least partially in said a gap.

Aptly, the method further comprises helically winding a further tape over at least one winding of the elongate tape element thereby nesting a region of a winding of the further tape in a mating region of a preceding winding of the elongate tape element, said mating region being disposed oblique to the smooth surface region prior to interlocking adjacent windings of the further tape.

Aptly, as the elongate tape element is helically wound, locating an end of a cross section of an incoming winding of the elongate tape element, that corresponds to a free edge of the elongate tape element, against an abutment surface provided by a step-like edge of a helical recess in the outer surface of the shaft member thereby determining a spaced apart relationship and thus a pitch for adjacent windings of the elongate tape element.

Aptly, as the elongate tape element is helically wound, supporting a region of a cross section of an incoming winding of the elongate tape element via an inclined surface of the recess thereby locating a remaining portion of a cross section of the elongate tape element that is not disposed in the recess in a desired configuration.

Aptly, the method further comprises helically winding the elongate tape element over the outer surface thereby providing at least a portion of a plurality of consecutively wound adjacent windings of the elongate tape element under a touchdown footprint of an incoming winding of the further tape as it is wound.

Aptly, the method further comprises providing at least a portion of at least three consecutively wound adjacent windings of the elongate tape element under a touchdown footprint of an incoming winding of the further tape as it is wound.

Aptly, said further tape comprises a carcass tape and adjacent windings of the wound carcass tape self-interlock subsequent to a squeezing pressure applied downstream of the footprint.

Disclosed herein is use of an elongate shaft member for manufacturing flexible pipe body, the elongate shaft member comprising an outer surface including a profiled surface region that extends along at least a portion of the shaft member and that has a profiled cross section that comprises repeated flat constant radius cross section regions, provided by a helically extending smooth surface region of the outer surface that lies on an imaginary cylindrical surface coaxial with a central longitudinal axis of the shaft member, disposed between spaced apart tape alignment cross section regions, provided by consecutive repeats of a helically extending variation to the outer surface lying on the imaginary cylindrical surface.

Aptly, the diameter of the shaft member reduces towards a free end of the shaft member to help gradually release the elongate tape element and overlying carcass tape from the shaft member.

Certain embodiments of the present invention help provide a smooth surface for a bore of a flexible pipe.

Certain embodiments of the present invention provide apparatus that allows relative movement of adjacent carcass tape windings whilst providing a substantially smooth radially inner surface to those wound carcass tape windings of the flexible pipe body.

Certain embodiments of the present invention provide a method that allows manufacture of flexible pipe body with a smoothing insert that overlaps with multiple carcass layer windings.

Certain embodiments of the present invention provide apparatus and methods for manufacturing flexible pipe body using a shaft member.

Certain embodiments of the present invention provide a windable elongate tape having a cross section that is such that adjacent windings of the elongate tape at least partially overlap to help bridge and thus cover a helical gap created between adjacent windings of a carcass tape. The elongate tape effectively creates an insert that partially intrudes into the gap but which does not radially extend into the gap by more that 40% of the total thickness of interlocked carcass windings. This helps minimise any influence on axial play between the carcass windings as a flexible pipe flexes in use.

Certain embodiments of the present invention can be used as a riser and for lengths of flexible pipe in excess of 500m and in sea depths of greater than 1000m.

Certain embodiments of the present invention provide an insert cross section that is windable using a carcass winding machine used in any event to wind a carcass tape to form a collapse resistant layer of flexible pipe body.

Certain embodiments of the present invention provide an elongate tape and an associated method of creation of a desired profile of the elongate tape and an associated method of winding the profiled elongate tape simultaneously with a carcass tape whereby a collapse resistant layer over which a fluid barrier layer can be extruded is produced. The elongate tape profile has a cross section having an upturned end and an intermediate region that are spaced apart by a predetermined distance so that a winding of the carcass tape nests between the upturned region and intermediate region. The nesting helps locate the elongate tape with respect to the carcass tape to help prevent dissociation in use. The upturned end of the elongate tape does not need to intrude into a helical gap too far to keep the insert in place. This helps maximise axial play of the carcass windings, makes manufacturing easier and can help control materials cost.

Certain embodiments of the present invention will now be described hereinafter, by way of example only, with reference to the accompanying drawings in which:
Figure 1 illustrates flexible pipe body;
Figure 2 illustrates certain uses of a flexible pipe;
Figure 3 illustrates a part of flexible pipe body viewed in cross section;
Figure 4 illustrates an example elongate tape element cross section for smoothing a radially inner surface of a wound carcass tape;
Figure 5 illustrates an alternative part of flexible pipe body viewed in cross section;
Figure 6 illustrates an alternative example elongate tape element cross section for smoothing a radially inner surface of a wound carcass tape;
Figure 7 illustrates a cross section view of a plane extending along and through a longitudinal axis of flexible pipe body comprising an elongate tape element illustrated in Figure 4, showing part of a method of manufacturing flexible pipe body;
Figure 8 illustrates a cross section view of a plane extending along and through a longitudinal axis of flexible pipe body comprising an elongate tape element illustrated in Figure 6, showing part of a method of manufacturing flexible pipe body;
Figure 9 illustrates an example elongate shaft member for use in supporting an elongate tape during manufacture of flexible pipe body;
Figure 10 illustrates part of a method of manufacturing flexible pipe body with an elongate tape element illustrated in Figure 4 using a support that has an outer surface region that is not purely cylindrical;
Figure 11 illustrates a magnified section of the flexible pipe body and associated recessed support shown in Figure 10;
Figure 12 illustrates part of an alternative method of manufacturing flexible pipe body with an elongate tape element illustrated in Figure 4; and
Figure 13 illustrates an alternative profile for at least a region of an elongate shaft member usable for manufacturing flexible pipe body.

In the drawings like reference numerals refer to like parts.

Throughout this description, reference will be made to a flexible pipe. It is to be appreciated that certain embodiments of the present invention are applicable to use with a wide variety of flexible pipe. For example certain embodiments of the present invention can be used with respect to flexible pipe body and associated end fittings of the type which is manufactured according to API 17J. Such flexible pipe is often referred to as unbonded flexible pipe. Other embodiments are associated with other types of flexible pipe.

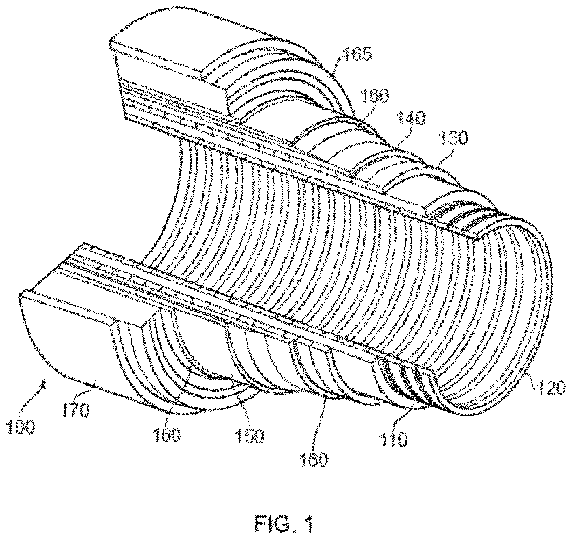

It will be understood that the illustrated flexible pipes are an assembly of a portion of pipe body and one or more end fittings (not shown) in each of which a respective end of the pipe body is terminated. Figure 1 illustrates how pipe body 100 is formed from a combination of layered materials that form a pressure-containing conduit. As noted above although a number of particular layers are illustrated in Figure 1, it is to be understood that certain embodiments of the present invention are broadly applicable to coaxial pipe body structures including two or more layers manufactured from a variety of possible materials. The pipe body may include one or more layers comprising composite materials, forming a tubular composite layer. It is to be further noted that the layer thicknesses are shown for illustrative purposes only. As used herein, the term "composite" is used to broadly refer to a material that is formed from two or more different materials, for example a material formed from a matrix material and reinforcement fibres.

A tubular composite layer is thus a layer having a generally tubular shape formed of composite material. Alternatively a tubular composite layer is a layer having a generally tubular shape formed from multiple components one or more of which is formed of a composite material. The layer or any element of the composite layer may be manufactured via an extrusion, pultrusion or deposition process or, by a winding process in which adjacent windings of tape which themselves have a composite structure are consolidated together with adjacent windings. The composite material, regardless of manufacturing technique used, may optionally include a matrix or body of material having a first characteristic in which further elements having different physical characteristics are embedded. That is to say elongate fibres which are aligned to some extent or smaller fibres randomly orientated can be set into a main body or spheres or other regular or irregular shaped particles can be embedded in a matrix material, or a combination of more than one of the above. Aptly the matrix material is a thermoplastic material, aptly the thermoplastic material is polyethylene or polypropylene or nylon or PVC or PVDF or PFA or PEEK or PTFE or alloys of such materials with reinforcing fibres manufactured from one or more of glass, ceramic, basalt, carbon, carbon nanotubes, polyester, nylon, aramid, steel, nickel alloy, titanium alloy, aluminium alloy or the like or fillers manufactured from glass, ceramic, carbon, metals, buckminsterfullerenes, metal silicates, carbides, carbonates, oxides or the like.

The pipe body 100 illustrated in Figure 1 includes an internal pressure sheath 110 which acts as a fluid retaining layer and comprises a polymer layer that ensures internal fluid integrity. The layer provides a boundary for any conveyed fluid. It is to be understood that this layer may itself comprise a number of sub-layers. It will be appreciated that when a carcass layer 120 is utilised the internal pressure sheath is often referred to by those skilled in the art as a barrier layer. In operation without such a carcass (so-called smooth bore operation) the internal pressure sheath may be referred to as a liner. A barrier layer 110 is illustrated in Figure 1.

It is noted that a carcass layer 120 is a pressure resistant layer that provides an interlocked construction that can be used as the innermost layer to prevent, totally or partially, collapse of the internal pressure sheath 110 due to pipe decompression, external pressure, and tensile armour pressure and mechanical crushing loads. The carcass is a crush resistant layer. It will be appreciated that certain embodiments of the present invention are thus applicable to 'rough bore' applications (with a carcass). Aptly the carcass layer is a metallic layer. Aptly the carcass layer is formed from stainless steel, corrosion resistant nickel alloy or the like. Aptly the carcass layer is formed from a composite, polymer, or other material, or a combination of materials and components. A carcass layer is radially positioned within the barrier layer.

The carcass layer is a "layer" in the sense that a radially innermost and outermost surface are created in single pass at a single manufacturing node. The single manufacturing node may include multiple tape handling sections axially close together so that they are effectively a single node. The node aptly extends over an axial distance of less than 2.5m. Aptly the node has a length of 1m or less.

The pipe body includes a pressure armour layer 130 that is a pressure resistant layer that provides a structural layer that increases the resistance of the flexible pipe to internal and external pressure and mechanical crushing loads. The layer also structurally supports the internal pressure sheath. Aptly as illustrated in Figure 1 the pressure armour layer is formed as a tubular layer. Aptly for unbonded type flexible pipe the pressure armour layer consists of an interlocked construction of wires with a lay angle close to 90°. Aptly in this case the pressure armour layer is a metallic layer. Aptly the pressure armour layer is formed from carbon steel, aluminium alloy or the like. Aptly the pressure armour layer is formed from a pultruded composite interlocking layer. Aptly the pressure armour layer is formed from a composite formed by extrusion or pultrusion or deposition. A pressure armour layer is positioned radially outside an underlying barrier layer.

The flexible pipe body also includes a first tensile armour layer 140 and second tensile armour layer 150. Each tensile armour layer is used to sustain tensile loads and optionally also internal pressure. Aptly for some flexible pipes the tensile armour windings are metal (for example steel, stainless steel or titanium or the like). For some composite flexible pipes the tensile armour windings may be polymer composite tape windings (for example provided with either thermoplastic, for instance nylon, matrix composite or thermoset, for instance epoxy, matrix composite). For unbonded flexible pipe the tensile armour layer is formed from a plurality of wires (to impart strength to the layer) that are located over an inner layer and are helically wound along the length of the pipe at a lay angle typically between about 10° to 55°. Aptly the tensile armour layers are counter-wound in pairs. Aptly the tensile armour layers are metallic layers. Aptly the tensile armour layers are formed from carbon steel, stainless steel, titanium alloy, aluminium alloy or the like. Aptly the tensile armour layers are formed from a composite, polymer, or other material, or a combination of materials.

Aptly the flexible pipe body includes optional layers of tape 160 which help contain underlying layers and to some extent prevent abrasion between adjacent layers. The tape layer may optionally be a polymer or composite or a combination of materials, also optionally comprising a tubular composite layer. Tape layers can be used to help prevent metal-to-metal contact to help prevent wear. Tape layers over tensile armours can also help prevent "birdcaging".

The flexible pipe body also includes optional layers of insulation 165 and an outer sheath 170, which comprises a polymer layer used to protect the pipe against penetration of seawater and other external environments, corrosion, abrasion and mechanical damage. Any thermal insulation layer helps limit heat loss through the pipe wall to the surrounding environment.

Each flexible pipe comprises at least one portion, referred to as a segment or section, of pipe body 100 together with an end fitting located at at least one end of the flexible pipe. An end fitting provides a mechanical device which forms the transition between the flexible pipe body and a connector. The different pipe layers as shown, for example, in Figure 1 are terminated in the end fitting in such a way as to transfer the load between the flexible pipe and the connector.

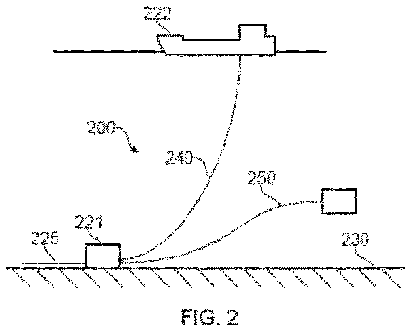

Figure 2 illustrates a riser assembly 200 suitable for transporting production fluid such as oil and/or gas and/or water from a sub-sea location 221 to a floating facility 222. For example, in Figure 2 the sub-sea location 221 includes a sub-sea flow line 225. The flexible flow line 225 comprises a flexible pipe, wholly or in part, resting on the sea floor 230 or buried below the sea floor and used in a static application. The floating facility may be provided by a platform and/or buoy or, as illustrated in Figure 2, a ship. The riser assembly 200 is provided as a flexible riser, that is to say a flexible pipe 240 connecting the ship to the sea floor installation. The flexible pipe may be in segments of flexible pipe body with connecting end fittings.

It will be appreciated that there are different types of riser, as is well-known by those skilled in the art. Certain embodiments of the present invention may be used with any type of riser, such as a freely suspended (free-hanging, catenary riser), a riser restrained to some extent (buoys, chains), totally restrained riser or enclosed in a tube (I or J tubes). Some, though not all, examples of such configurations can be found in API 17J. Figure 2 also illustrates how portions of flexible pipe can be utilised as a jumper 250.

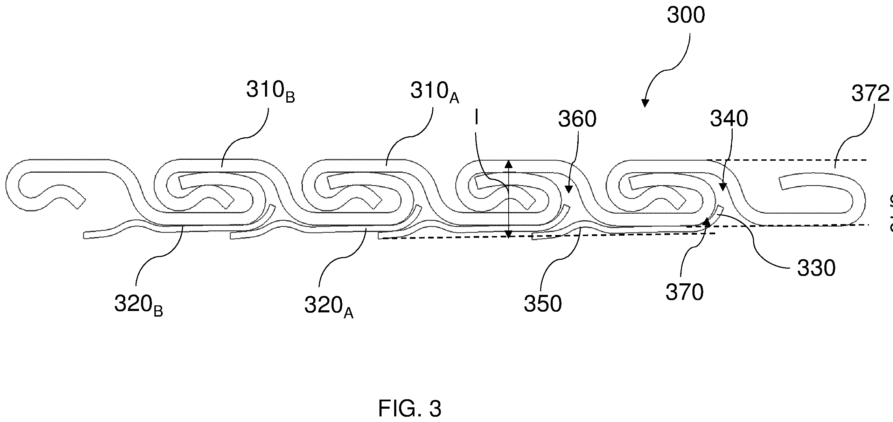

Figure 3 illustrates an example part of flexible pipe body 300 comprising a cross section of a plane that extends through the flexible pipe body in a direction parallel to a longitudinal axis of the flexible pipe body. This is referred to herein as a parallel cross section. The parallel cross section of the flexible pipe body shows interlocked carcass tape windings 310. The carcass tape windings shown are self interlocked in the sense that they do not require additional interlocking windings of an interlock tape. All embodiments described herein are not restricted to self-interlocked carcass tape windings but are applicable to any carcass windings wound to create a collapse resistant layer locatable within a barrier layer whereby adjacent windings of a carcass forming tape create a helical gap that would otherwise (without the insert described) risk causing FLIP. The parallel cross section shown in Figure 3 also shows windings of an elongate tape 320 that is a folded strip disposed radially inside the carcass tape windings 310. The elongate tape is an example of an elongate tape element. The elongate tape 320 is made of metal, plastic or composite. The elongate tape may be a strip of material. The elongate tape 320 shown is a stainless steel metal folded or bent to provide the profile illustrated in Figure 3. The elongate tape cross-section 320 shown in Figure 3 has a first portion 330. The first portion corresponds to a first end of the cross section of the elongate tape and is configured to locate in a first gap region 340 between adjacent carcass tape windings. Locating the first portion in the gap region between adjacent windings of the carcass tape helps prevent movement of the carcass tape windings 310 relative to the elongate tape windings 320. Windings of the carcass tape 310 may still be able to move relative to each other to allow for small movements during bending of flexible pipe body. This is referred to as axial play.

Windings of the elongate tape 320 also at least partially overlap to help support adjacent elongate tape windings. Overlapping windings of the elongate tape 320 helps prevent production fluids flowing in a flexible pipe from entering the gap between carcass tape windings 310. The elongate tape 320 also helps to smooth unidirectional fluid flow, which in Figure 3 could be fluid flow from right to left. The elongate tape 320 may also support bi-directional fluid flow. Windings of the elongate tape 320 may overlap by at least 20% of the width of the elongate tape. Aptly the overlap is 10% or more. Aptly the overlap is 30% or less of a cross section width of the elongate tape.

As illustrated in Figure 3, the elongate tape cross section also comprises a body portion 350, extending from the first portion 330 to a remaining end of the elongate tape cross section. The body portion 350 is shaped to bridge a further gap region 360 between adjacent windings of the carcass tape 310. The first gap region corresponds to an instance of a helical gap and the further gap region corresponds to an adjacent (in the axial sense) instance of the helical gap.

The first portion 330 of the elongate tape has a curved shape that mates with a shape of a curve of a carcass winding at a lift off point 370 where a carcass tape winding bends away from a radially innermost surface 372 of the carcass tape winding 310.The radially outermost surface 374 provided by the carcass tape windings is also illustrated in Figure 3. Figure 3 also helps illustrate a total thickness I of the combined carcass windings and associated smoothing insert 320.

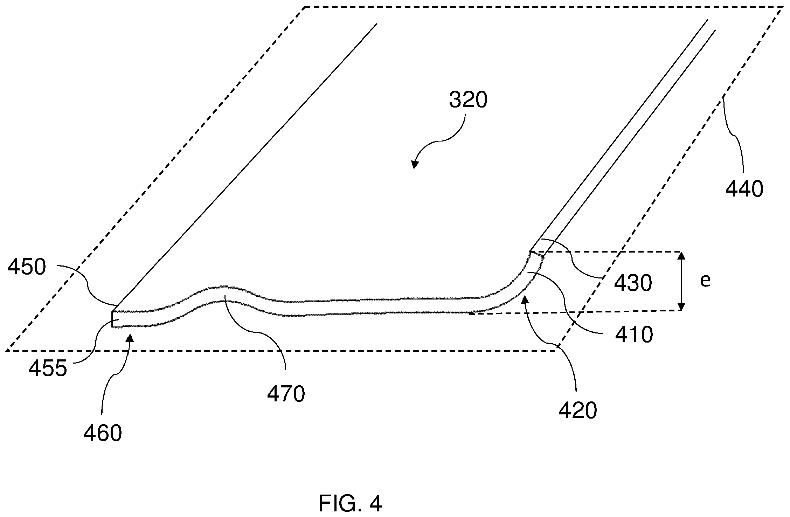

Figure 4 illustrates a cross section of a plane that extends perpendicular to a longitudinal axis of the elongate tape 320 illustrated in Figure 3. This is referred to herein as an orthogonal cross section. The elongate tape cross section 320 has a first portion 410 that is curved to locate into a gap region between windings of a carcass tape. The first portion 410, corresponding to a first end 420 of the elongate tape cross section, extending from a first free edge 430 of the elongate tape to a region of the elongate tape cross section that is substantially parallel to an imaginary planar surface 440. That is to say, the first portion 410 is curved and extends from the first free edge 420 of the elongate tape to a region where the elongate tape cross-section is substantially flat. The imaginary planar surface 440 is perpendicular to both an axial direction of the elongate tape and the plane of the orthogonal cross section described above. A free edge 420 is an edge extending along a length of the elongate tape, out of the plane of the cross section of the elongate tape. The degree of curvature of the first portion aptly matches a corresponding curved part of a radially inner surface of a carcass tape winding in flexible pipe body. That is to say, the first portion 410 is shaped to match a profile of at least a portion of a carcass tape where the shape of the carcass tape is intended to curve away from a radially inner surface of the wound carcass tape. This helps the elongate tape 320 locate at least partially into the gap between adjacent windings of a carcass tape of flexible pipe body immediately next to the winding instance of the elongate tape and helps to prevent the elongate tape 320 from slipping relative to the carcass tape when exposed to fluid flow in use. A degree of curvature of the first portion 410 is less than or equal to 90 degrees. The degree of curvature may substantially match the degree of curvature of a carcass tape winding at the edge of a gap region between adjacent carcass tape windings.

The first portion 410 is configured to curve "upwards" in a radially outward direction. That is to say the first portion turns away from a central primary axis of the flexible pipe body in use. The width of the tape that curves up in the first portion is less than 50% of the total thickness 372 of a carcass tape winding. That is to say, the width of the first portion is less than 50% of the total thickness of a carcass tape winding. Aptly the width e of the curved end is 40% or less or 30% or less or 20% or less or 15% or less of the total thickness 372 of the carcass tape winding. The first portion does not need to extend very far into the gap between adjacent carcass tape windings to correctly locate and position the tape during use. By contrast, configuring the first portion 410 to extend further than the above-mentioned amount into the gap between carcass tape windings may impact on the position of the tape insert during use.

The elongate tape 320 also includes a remaining free edge 450 corresponding to a remaining end 455 of the elongate tape cross section. The elongate tape 320 also includes a body portion 460 extending between the first portion 410 and the remaining edge 450. The body portion 450 comprises an intermediate region 470. The intermediate region 470 may be curved or include a curved section. The shape of the curve in the intermediate region may be a bell curve or arc or the like. The curved section of the intermediate region 470 illustrated in Figure 4 is curved at a position along the cross-section where in use the elongate tape 320 will help bridge a gap region between adjacent carcass tape windings. The curved section in the intermediate region 470 is therefore configured to be locatable in the gap between adjacent windings of a carcass tape. At least part of the curved section may also be profiled to substantially match the degree of curvature of the first portion 410 of the elongate tape cross section. Optionally the curved section 470 has a curved region that mates with a curve of a carcass winding as it lifts off away from a radially innermost extent towards a gap between adjacent windings of the carcass tape. Matching the curve of the first portion may help to locate and secure windings of the elongate tape element in place as a first portion of an elongate tape element winding 320 can press against the curved intermediate region 470 of a neighbouring elongate tape element winding in use. Optionally the intermediate region 470 is located towards a remaining free edge 450. Optionally, the intermediate region 470 is positioned substantially centrally across the width of the elongate tape cross section.

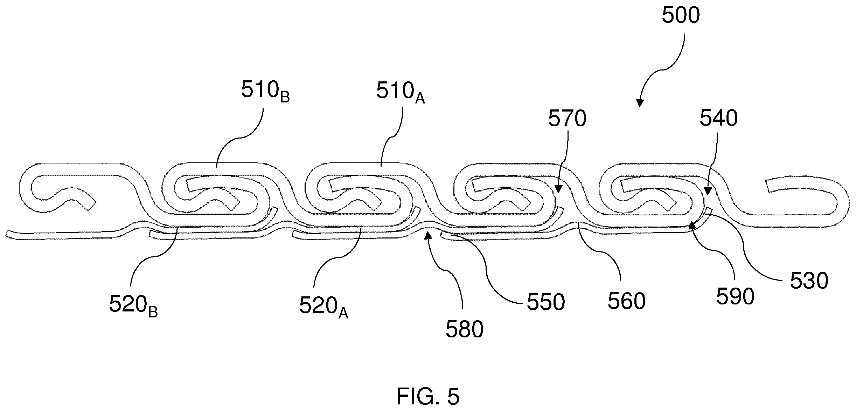

Figure 5 illustrates another example part of flexible pipe body 500. The cross-section shows interlocked carcass tape windings 510. Windings of an elongate tape 520 which is an example of an elongate tape element 520 are also shown disposed radially inside the carcass tape windings 510. The elongate tape 520 is a tape made of metal, plastic or composite. The elongate tape 520 may be a strip of material. The elongate tape 520 shown in figure 5 begins as a stainless steel strip having a generally uniform thickness cross section and that is long relative to the width of the strip. This is folded by progressive rollers during manufacture to create the cross section shown in figure 5. The elongate tape 520 has a cross-section that is thus folded or bent to provide the profile illustrated in Figure 5. The elongate tape 520 has a first portion 530 that extends into a first gap region 540 between adjacent windings of the carcass tape 510.

The elongate tape cross section shown in Figure 5 also comprises a body portion, extending from the first portion 530 to a remaining end 550 of the elongate tape cross section. The body portion includes an intermediate region 560 that bridges a further gap region 570 between adjacent carcass tape windings.

The remaining end 550 of the elongate tape cross section is curved to locate into a curved intermediate region 560 of a neighbouring winding of the elongate tape. The remaining end, intermediate region and body portion all extend towards a common side of the cross section away from a plane that contains the flat cross section regions of the insert tape. The curved intermediate region is shaped to provide a recess region 580 that may receive the remaining end 550 of a neighbouring elongate tape winding. The first portion 530 and the remaining end 550 of the elongate tape cross section provide locating portions that help prevent movement of the carcass tape windings 510 relative to the elongate tape windings 520. The ends of the cross section also help to secure each winding of the elongate tape 520 in position. Windings of the carcass tape 510 may still be able to move relative to each other to allow for small movements during bending of flexible pipe body. The carcass windings nest between the upturned end of the insert cross section and the intermediate region of the elongate tape cross section. Nevertheless a carcass winding may slide laterally/axially with respect of an insert tape winding at an extreme of a flexible pipe bending. Likewise adjacent insert windings of the helically wound elongate tape 520 can slide along each other if needed during extreme flexing of the flexible pipe body.

Windings of the elongate tape element 520 also at least partially overlap to help support adjacent or neighbouring elongate tape windings. Overlapping the elongate tape windings helps prevent or at least limit production fluids flowing in a flexible pipe from entering the gaps between carcass tape windings 510. The elongate tape 520 may also help to smooth unidirectional fluid flow, which in Figure 5 could be fluid flow from right to left. The elongate tape 520 may also support bi-directional fluid flow. Windings of the elongate tape 520 may overlap by at least 40% of the width of the elongate tape. Aptly the adjacent windings of the insert /elongate tape overlap by 30% or less, or 20% or less or 10% or less, of a total cross sectional width of the insert.

As illustrated in Figure 5, the elongate tape 520 is sized and positioned to include a portion in a first gap region between a first pair of carcass windings and bridge a further gap region 570 between another pair of adjacent windings (one of which is a winding of the first pair) of the carcass tape 510.

The first portion 530 of the elongate tape has a curved shape that mates with a shape of a curve of a carcass winding at a lift off point 590 where a carcass tape winding bends away from a radially innermost surface of the carcass tape winding 510.

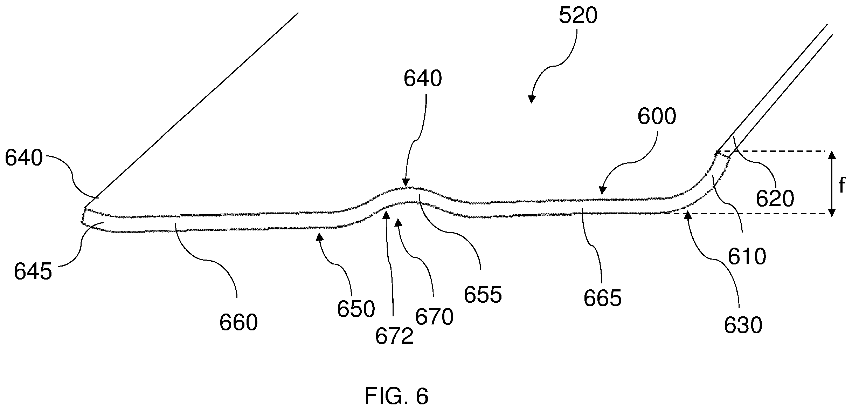

Figure 6 illustrates a cross section of the elongate tape 520 depicted in Figure 5. The elongate tape 520 has a cross section 600 comprising a first portion 610, extending from a first free edge 620 of the elongate tape, that is curved for locating into a gap region between windings of a carcass tape. The first portion 610 corresponds to a first end 630 of the elongate tape cross section. The first portion 610 of the elongate tape 520 extends from a first free edge of the elongate tape element to a region of the elongate tape that is substantially flat. That is to say, the first portion extends from the first free edge of the elongate tape to a point along the width of the cross section of the elongate tape where the cross section of the elongate tape is no longer curved. The degree of curvature of the first portion is shaped to match a degree of curvature of a curved part of a radially inner surface of a carcass tape winding in flexible pipe body. That is to say, the first portion 610 is shaped to match a profile of at least a portion of a carcass tape winding. This helps the first free edge 620 of the elongate tape 520 locate into the gap between adjacent windings of a carcass tape of flexible pipe body and helps prevent the elongate tape 520 from slipping unduly relative to the carcass tape. A degree of curvature of the first portion is less than or equal to 90 degrees. The degree of curvature may substantially match the degree of curvature of a carcass tape winding at the opening of a gap region between adjacent carcass tape windings.

The first portion 610 of the insert tape shown in Figure 6 is configured to curve upwards with respect to the figure. This corresponds to a direction away from a central bore of the flexible pipe body. The width f of the elongate tape that curves upwards in the first portion 610 is less than 50% of the total thickness of a carcass tape winding in flexible pipe body. Aptly the width is less than 40% or optionally less than 30% or optionally less than 20% of the total thickness of a carcass winding (between the radially inner and outer extent of each carcass winding. That is to say, the width of the elongate tape cross section that corresponds to the first portion 610 does not exceed a distance equivalent to 50% of the total thickness of a carcass tape winding. The first portion does not need to extend very far into a gap region between adjacent carcass tape windings to correctly locate and position the elongate tape. This is in contrast to prior art inserts that require deep penetration of an insert or clamping of an insert with respect to a carcass. In contrast to the present invention, configuring the first portion to extend further than the above-mentioned amount into the gap between carcass tape windings may impact on the position of the tape insert during use, which could potentially cause windings of the tape insert to lose their overlap and allow fluid flow to access gaps between carcass tape windings.

The elongate tape 520 shown in figure 6 also includes a remaining free edge 640. In Figure 6, the remaining free edge 640 corresponds to a remaining end 645 of the elongate tape cross section. The elongate tape cross section also includes a body portion 650, extending between the first portion 610 and the remaining end 645 of the elongate tape cross section. The remaining end 645 of the elongate tape cross section is curved proximate to the remaining free edge 640. The body portion 650 of the elongate tape cross section shown in Figure 6 includes an intermediate region 655. The body portion optionally further includes two generally flat axially extending regions 660, 665.

The intermediate region 655 is curved or includes a curved section. Optionally the intermediate region is positioned centrally across a width of the elongate tape cross section. Optionally the curved intermediate region has the shape of a bell curve. The curved section of the intermediate region 655 illustrated in Figure 6 curves at a position along the cross section where, in use, the elongate tape 520 will bridge the gap between adjacent carcass tape windings. The curved intermediate region is therefore configured to be locatable at least partially in a gap region between adjacent windings of a carcass tape. At least part of the curve of the intermediate region may also be shaped to substantially match the degree of curvature of the first portion 610. This may help to locate and secure windings of the elongate tape in place as a first portion of an elongate tape winding 520 can press against the curved intermediate region 655 of a neighbouring elongate tape winding. The intermediate region 655 provides a recess region 670 for receiving a remaining free edge 640 of a neighbouring elongate tape winding.

The curved remaining end of the elongate tape cross section helps locate the remaining free edge into a channel or recessed region created by the curved intermediate region 655 of a neighbouring and/or adjacent elongate tape winding. The curved intermediate region reveals a radially inner facing recess 672 that helically extends along the pipe body but this recess is smooth and not deep and most of the time is partially covered. As such this minor recess does not give rise to FLIP. In comparison to the elongate tape 320 illustrated in Figure 4, the arcuate shape of the remaining end of the elongate tape cross section shown in Figure 6 provides an additional locating and/or securing feature. The remaining end 620 may be curved to match a curvature of the intermediate region 655. The width of the elongate tape 620 that curves in the remaining end 620 (proximate to the remaining free edge) does not exceed the width of the intermediate region 655 of the elongate tape cross section.

Two axially extending regions 660, 665 are shown disposed between the intermediate region 655 and each respective end 610, 645 of the elongate tape cross section. The axially extending regions 660, 665 are shaped to match a radially inner surface of the carcass tape of flexible pipe body. Whilst these regions are illustrated in Figure 6 as being substantially flat, these axially extending regions may be shaped to match a radially inner surface of a carcass tape for a variety of different carcass tape cross sections.

The elongate tapes 320, 520 show in Figures 4 and 6 may be bent or folded into shape either immediately prior to being wrapped around a mandrel for manufacturing flexible pipe body or any period time beforehand.

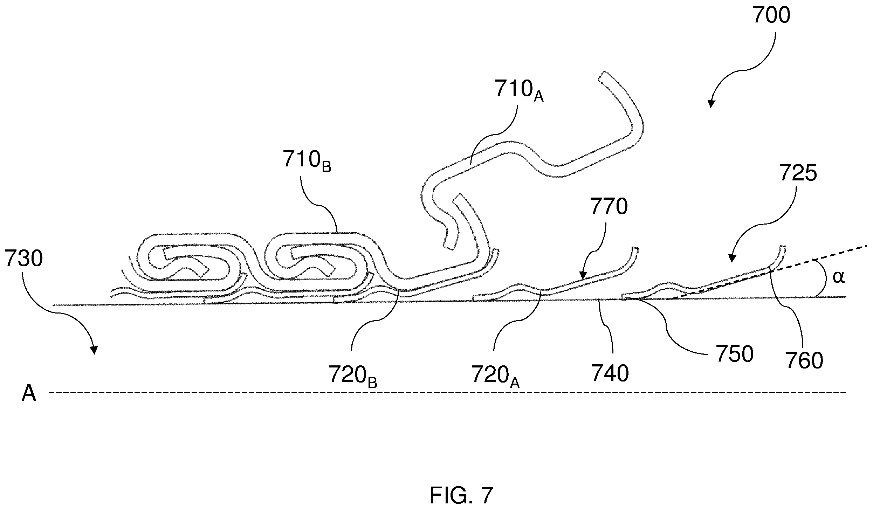

Figure 7 illustrates part of a method of manufacturing flexible pipe body with the elongate tape shown in Figure 4. Figure 7 shows a carcass tape 710 being wrapped over an elongate tape 720. In a first step, the elongate tape 720 is wound around an elongate shaft member 730 at least twice before winding of the carcass tape 710 can commence. Thereafter, winding of the elongate tape element and winding of the carcass tape is simultaneous. The elongate shaft member 730 is an example of a mandrel or mandrel member.

The elongate tape 720 is wound at an oblique angle to a longitudinal axis (A) of the shaft member 730 such that the elongate tape is provided on the shaft member at a tilt relative to a constant radius region of the outer surface 740 of the shaft member. Optionally, the angle of tilt of the elongate tape 720 relative to the longitudinal axis of the shaft member is less than 30 degrees. Aptly the angle of tilt is continuous for all windings. Aptly the angle of tilt is 25 degrees or less. Aptly the angle is 20 degrees or less. Optionally, the elongate tape 720 is wound with sufficient tilt to allow further winding of the elongate tape without impacting on preceding windings of the tape. The elongate tape 720 is tilted such that a first segment 750 of the elongate tape is touched down on the outer surface 740 of the shaft member as the elongate tape is wound. Optionally, the first segment includes at least the remaining free edge of the elongate tape 720. A remaining segment 760 of the tape is provided at an oblique angle Alpha to a longitudinal axis of the shaft member 730.

Winding the carcass tape 710 in Figure 7 includes winding a generally S-shaped carcass tape over windings of the elongate tape 720. The carcass tape 710 Is a folded strip. The pitch that the carcass tape 710 is wound at matches the pitch that the elongate tape element 720 is wound at. The carcass tape 710 is wound such that a lead portion of each winding of the elongate tape element 720 locates into a respective gap between adjacent windings of the carcass tape 710. Additionally, or alternatively, a further tape element could be wound over the elongate tape in addition to or in place of the S-shaped carcass tape shown in figure 7. Part of the further segment 760 provides a mating region 770, extending from the first free edge of the elongate tape to the intermediate region of the elongate tape cross section, for receiving a radially innermost surface of a mating section of the carcass tape. Part of the carcass winding thus nests in a cooperating section of the insert winding.

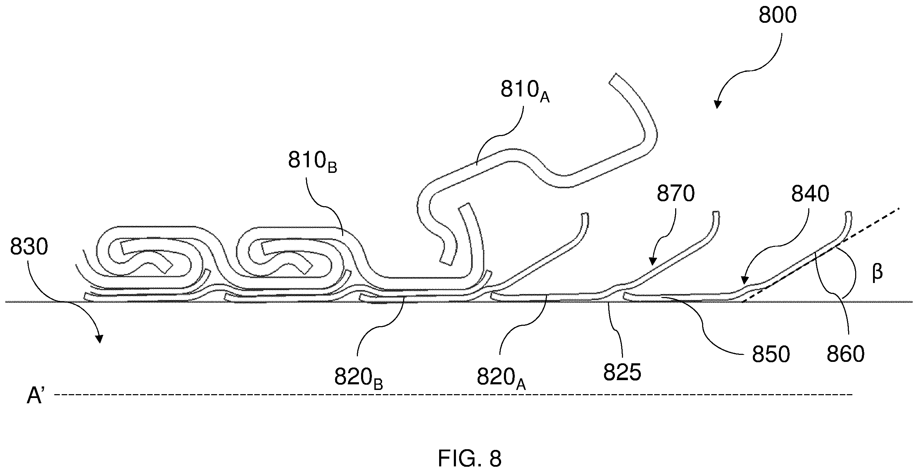

Figure 8 illustrates an alternative cross section of part of flexible pipe body during its manufacture, showing a carcass tape 810 being wrapped over a different elongate tape 820 to that shown in Figure 7 this time having a cross section similar to that of the elongate tape illustrated in Figure 6. In a first step, the elongate tape 820 is wound around the outer surface 825 of a shaft member 830 at least twice before winding of the carcass tape 810 can commence. Thereafter, winding of the elongate tape and winding of the carcass tape is simultaneous.

The elongate tape 820 is wound with a bend angle relative to the longitudinal axis (A') of the shaft member 830. Optionally, the bend angle Beta of the elongate tape 820 relative to the longitudinal axis of the shaft member is less than 30 degrees. The elongate tape may be bent at a location along the elongate tape cross section proximate to the intermediate region 840. Optionally, the elongate tape 820 is wound with sufficient bend to allow further winding of the tape insert without impacting on preceding windings of the tape insert. The elongate tape element 820 is bent such that a first segment 850 of the elongate tape is positioned substantially flat on the outer surface 825 of the shaft member 830 as the elongate tape wound. Optionally, the first segment 850 of the elongate tape 820 extends from the remaining edge of the elongate tape to the intermediate region of the elongate tape cross section. Optionally, the first segment 850 partially includes the intermediate region 840.

The elongate tape 820 is wound at a predetermined first pitch. The pitch at which the elongate tape 820 is wound is predetermined by a required overlap between adjacent windings of the elongate tape and/or required locations of portions of the elongate tape 820 relative to a gap between windings of the carcass tape 810. Subsequent to laying down a first elongate tape winding around the shaft member 830, an incoming elongate tape winding 820 is wound around the shaft member between the outer surface of the shaft member and the preceding elongate tape winding. Winding the tape in this way is facilitated by the bending of the tape as its wound. Alternatively, the elongate tape may be bent prior to winding. After laying down a winding of the carcass tape over an elongate tape winding 820, the elongate tape is pressed against the outer surface of the shaft member, thereby flattening or at least reducing the bend angle, as adjacent carcass tape windings are pressed and interlocked. Part of the further segment 760 provides a mating region 770, extending the first free edge of the elongate tape to the intermediate region of the elongate tape cross section, for receiving a radially innermost surface of the carcass tape.

Winding the carcass tape 810 in Figure 8 includes winding a generally S-shaped tape over windings of the elongate tape element 820. The pitch that the carcass tape 810 is wound at matches the pitch that the elongate tape element 820 is wound at. The carcass tape 810 is wound such that a first portion of each winding of the elongate tape element 820 locates into a respective gap region between adjacent windings of the carcass tape 810. Additionally, or alternatively, a further tape element could be wound over the elongate tape in addition to or in place of the carcass tape. Part of the further segment 860 provides a mating region 870, extending the first free edge of the elongate tape to the intermediate region 840 of the elongate tape cross section, for receiving a radially innermost surface of the carcass tape.

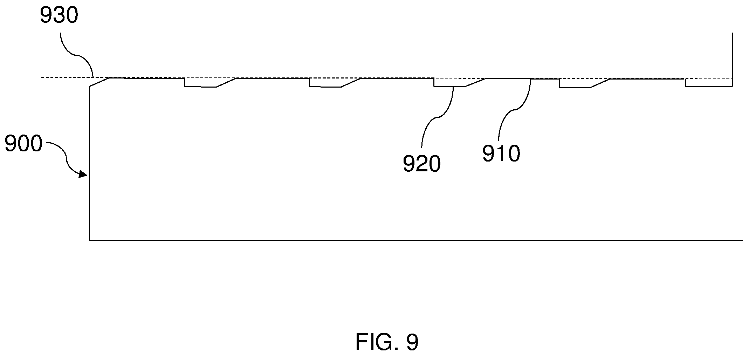

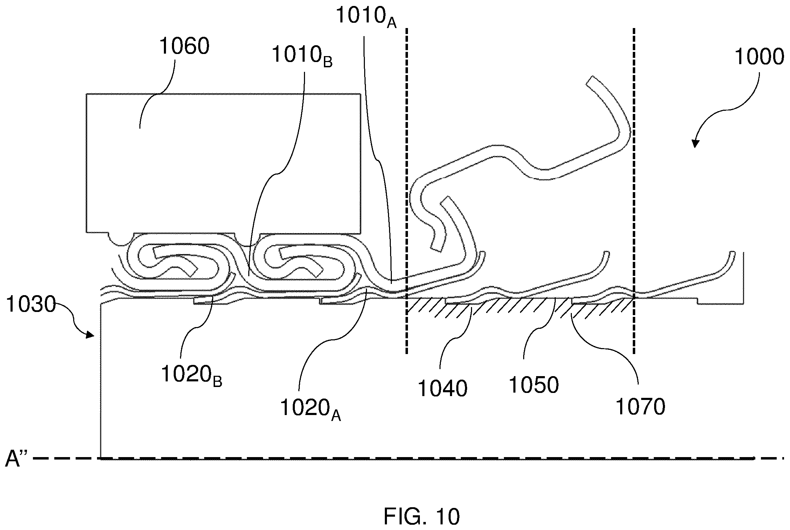

Figure 9 illustrates a cross section view of a plane extending along a length of an alternative shaft member 900 for manufacturing flexible pipe body. The plane contains the central axis of the shaft/mandrel body. The shaft member 900 has a profiled cross section over at least part of the length of the shaft body that comprises a plurality of spaced apart, repeating, constant radius cross section regions 910. The shaft member 900 also has at least one helically extending variation 920 in the form of a helical recess in a surface of the shaft member. Alternatively, or additionally, the helically extending variation comprises a helical protrusion. The helically extending variation is provided for spacing windings of the elongate tape element during use. Optionally, a plurality of notches or recesses in the shaft member 900, spaced periodically along a helical path, could be utilised. A constant variation in the form of a constant helically extending recess in the outer surface of the shaft body is shown in Figures 9 and 10.

The constant radius regions 910 of the cross section are provided by smooth surface regions of the outer surface that extend helically along a length of the shaft member. These surface regions coincide with an imaginary cylindrical surface 930 corresponding to a radially outermost limit of the shaft member 900. The imaginary cylindrical surface 930 is coaxial with a central longitudinal axis of the shaft member.

It will be understood that the outer surface of the shaft member may taper in towards a free end of the shaft member from a point at least part-way along the length of the shaft member. Through this gradual reduction in diameter of the shaft member towards the free end of the shaft member, the elongate tape windings can be eased from the end of the shaft member progressively, eliminating the risk of the elongate tape and the shaft member sticking, which could result in inconsistent form or pitch. When the shaft member is tapered in this way at least part of the imaginary surface 930 may be frusto-conical or bullet shaped.

Figure 10 shows part of a method 1000 of manufacturing flexible pipe body using the shaft member illustrated in Figure 9. A carcass tape 1010 is wound simultaneously with an elongate tape 1020 around a shaft member 1030. In Figure 10, the shaft member 1030 is shown with at least one helically extending variation 1040 in the form of a helical recess in an outer surface 1050 of the shaft member. Alternatively, or additionally, the helically extending variation comprises a helical protrusion. The helically extending variation is provided for spacing windings of the elongate tape element 1020.

The helical recess 1040 helps locate at least a first segment of the elongate tape as it is laid down onto the outer surface of the shaft member. The helical recess extends along a respective portion of a whole length of the shaft member at a predetermined pitch. The profiled portion may be a whole length or just a part of the whole length. The very end of the shaft body may be inwardly tapered to assist release of the wound windings as they are removed from an end of the shaft member. The pitch of the helical recess is predetermined by a required overlap between adjacent windings of the elongate tape and/or required locations of portions of the elongate tape 1020 relative to a gap between windings of the carcass tape 1010 (i,e. the pitch is designed to substantially match that of the carcass pitch) . The width of the helical recess is less than the width of the elongate tape. This allows the helical recess to help tilt or bend the elongate tape because the first segment of the tape abuts a radially set back surface of the shaft member whilst part of the remaining segment of the elongate tape abuts a radially outer surface 1050 outside the recess 1040 relative to the radially set back surface. This helps to provide the tapes at the oblique angle required for locating adjacent elongate tape windings on the outer surface of the shaft member.

As the elongate tape and carcass tape are wound around the shaft member, the shaft member turns in the same direction as the winding direction of the tapes, at the same speed of rotation. A tracked caterpillar system is typically used to pull the manufactured pipe body carcass from the shaft member at a rate equal to the line manufacturing speed. Here the carcass and elongate tape are thereby guided (through their travel abutting the rotating helically extending variation) towards the end of the shaft member 1030 as winding of the tapes progresses.

As winding of the tapes 1010, 1020 advances, at least one press roller 1060 compresses windings of the carcass tape 1010 and windings of the elongate tape 1020, thereby deforming and interlocking adjacent windings of the S-shaped carcass tape 1010 and locating at least a portion of each elongate tape winding into a gap between adjacent carcass tape windings.

The press is an example of a part of a manufacturing node that together with the rotating profile rollers and winding rollers help form a layer. The further segment of the elongate tape provides a mating region for a portion of the carcass tape to locate into as the carcass tapes are compressed with the press roller 1060. The mating region may extend between the first portion of the elongate tape and the intermediate region.

Figure 10 also shows that a folded strip of a carcass tape 1020 has a footprint 1070 as it is wound over the elongate tape 1020. The footprint 1070 covers a plurality of consecutive elongate tape windings. Optionally, the footprint 1070 covers at least three windings of the elongate tape 1020.

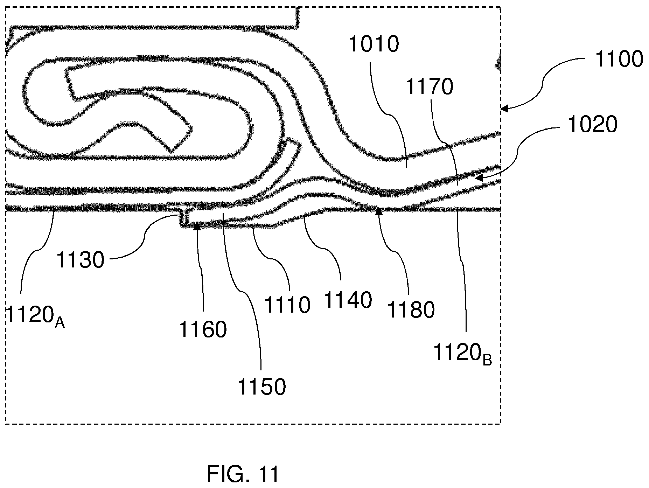

Figure 11 illustrates a magnified view of the method illustrated in Figure 10, focussing on the helically extending variation 1040. The helically extending variation 1040 shown in the profiled cross section in Figure 11, is a recess in the outer surface of the shaft that would otherwise be a smooth cylindrical outer surface. The recess has a common cross section 1100 extends helically at a common pitch along a portion of the shaft. The recess thus effectively repeats along a length of the shaft member 1030. The common cross section 1100 has radially inner surface region 1110, relative to an imaginary cylindrical outer surface, separating constant radius cross section regions 1120. The common cross section also includes a first end 1130 and a further end 1140 of the helically extending variation or helical recess. Optionally, the radially inner surface region 1110 is substantially flat, or the radially inner surface region is varying or textured.

The first recess end 1130 of the recess includes an abrupt radially inward step, extending into the outer surface at around 90 degrees to the outer surface of the shaft member 1030. Alternatively, the inward step may extend at less than 90 degrees into the outer surface of the shaft member. The further recess end 1140 is provided by an inclined surface region of the recess, that extends between a radially innermost surface region 1110 of the recess rising to a point that meets an imaginary cylindrical surface, coinciding with constant radial cross section regions 1120.

The width of the helical recess is less than the width of the elongate tape. This allows the helical recess to help tilt or bend the elongate tape because the first segment 1150 of the tape 1020 contacts an abutment surface 1160 within the recess whilst part of the remaining segment 1170 of the elongate tape abuts a radially outer surface 1180 outside the recess 1040 relative to the abutment surface. Optionally, the abutment surface 1160 is a radially set back surface of the shaft member. The tilting or bending helps provide the tape windings 1120 at the oblique angle required for locating adjacent elongate tape windings on the outer surface of the shaft member at the desired helical pitch.

Part of the remaining segment 1170 of the elongate tape 1020 may abut the inclined surface 1140 of the recess, which would also help to tilt or bend the elongate tape. The first segment 1150 of the elongate tape 1020 may extend between the remaining edge of the elongate tape and the intermediate region of the elongate tape cross section. The first segment may also include at least part of the intermediate region. Parts of the first segment may be provided merely proximate to the abutment surface 1160.

The recess is an example of a variation that can be engendered in an otherwise smooth cylindrical surface of a mandrel used to support a carcass layer of flexible pipe body. The repetition of the variation makes the shaft particularly useful for manufacturing elements that are themselves highly repetitive in their structure. Use of a shaft with a variation rather than a simple sooth cylindrical surface provides new opportunities to create wound layers that were not possible with other prior art support structures. The variation, whether it is a recess or a protuberance or a combination of a recess in the otherwise cylindrical surface and a protruding element that extends out beyond that otherwise cylindrical surface helps align a part of an incoming winding in a different orientation to that which would otherwise be possible with conventional techniques. This opens up opportunities for wound structures that were not previously capable of manufacture.

As the elongate tape and the carcass tapes are wound around the shaft member, the shaft member turns in the same direction as the winding direction of the tapes, and at the same speed of rotation. The carcass and elongate tapes are thereby guided (through their travel along the rotating helically extending variation) towards the end of the shaft member 1230 as winding of the tapes progresses. The helical recess helps push the wound carcass and elongate tapes along and off the shaft member.

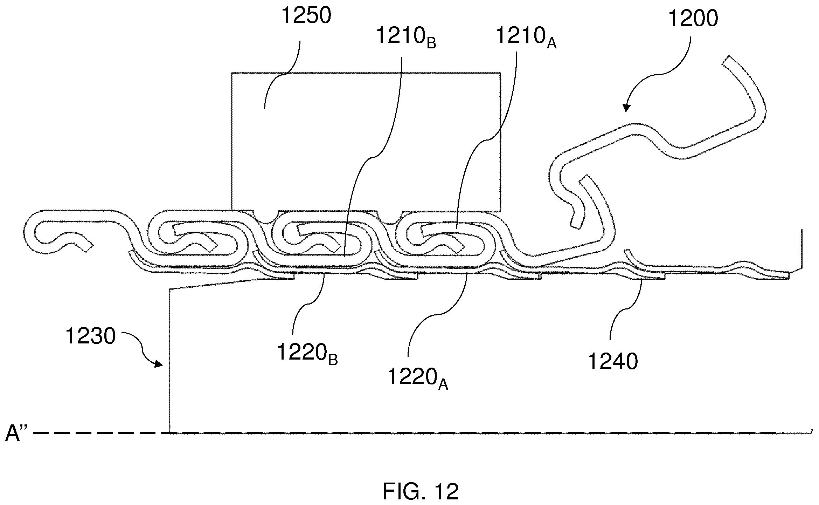

Figure 12 illustrates a cross section view of a plane extending along a length of a further alternative flexible pipe body 1200 during its manufacture. Figure 12 shows at least part of a manufacturing process similar to that shown in Figures 10 and 11, the difference being that a helical recess in the shaft member has a common cross section that is reversed relative to the common cross section of the helical recess shown in Figure 11. This allows flexible pipe body to be manufactured with preferred flow directions. That is to say, the shaft member can be profiled to facilitate flexible pipe body for different directions of fluid flow.

Figure 12 shows a carcass tape 1210 being wound simultaneously with an elongate tape 1220 around a shaft member 1230. Additional or alternative tape elements may be wound with the elongate tape. In Figure 10, the shaft member 1230 is shown with at least one helically extending variation 1240 in the form of a helical recess in an outer surface of the shaft member 1230. Alternatively, or additionally, the helically extending variation comprises a helical protrusion. The helically extending variation is provided for spacing windings of the elongate tape element 1220. Optionally, a plurality of notches or recesses in the shaft member 1230, spaced periodically along a helical path, could be utilised.

The shaft member 1230 has a profiled portion that has a cross section that comprises a plurality of spaced apart, repeating, constant radius cross section regions. These constant radius regions of the cross section are provided by smooth surface regions of the outer surface that extend helically along a length of the shaft member. These surface regions coincide with an imaginary cylindrical surface corresponding to a radially outermost limit of the shaft member 1230. The imaginary cylindrical surface is coaxial with a central longitudinal axis of the shaft member.

The helically extending variation shown in the profiled cross section in Figure 12, has a common cross section that repeats along a length of the shaft member 1230. The common cross section has radially inner surface region, relative to the imaginary cylindrical outer surface, that separates first and further ends of the recess. Optionally, the radially inner surface region is substantially flat, or the radially inner surface region is varying or textured.

The first end of the recess includes an abrupt radially inward step, extending into the outer surface at around 90 degrees to the outer surface of the shaft member 1230. Alternatively, the inward step may extend at an angle less than 90 degrees into the outer surface of the shaft member. The further recess end is provided by an inclined surface region of the recess, that extends between a radially innermost surface region of the recess, rising to a location that meets the imaginary cylindrical surface.

The helical recess 1240 helps locate at least part of a first segment of the elongate tape as it is laid down onto the outer surface of the shaft member. The helical recess 1240 extends along a length of the shaft member 1230 at a predetermined pitch. The pitch of the helical recess is predetermined by a required overlap between adjacent windings of the elongate tape and/or required locations of portions of the elongate tape 1220 relative to a gap between windings of the carcass tape 1210 (i,e. the pitch is designed to substantially match that of the carcass pitch). The width of the helical recess is less than the width of the elongate tape. This allows the helical recess to help tilt or bend the elongate tape because the first segment of the tape abuts a radially set back surface of the shaft member whilst part of the remaining segment of the elongate tape abuts a radially outer surface outside the recess relative to the radially set back surface. This helps to provide the tapes at the oblique angle required for locating adjacent elongate tape windings on the outer surface of the shaft member. The part of the remaining segment of the elongate tape may abut the inclined surface of the recess, which would also help tilt or bend the elongate tape 1220. The first segment may extend between the remaining free edge of the elongate tape and the intermediate region of the elongate tape cross section. The first segment may also include at least part of the intermediate region. Parts of the first segment may be provided merely proximate to a radially set back surface associated with the recess.

As winding of the tapes 1210, 1220 advances, at least one press roller 1250 compresses windings of the carcass tape 1210 and windings of the elongate tape 1220, thereby deforming and interlocking at least two adjacent windings of the S-shaped carcass tape 1210 and locating at least a portion of each elongate tape winding into a gap between adjacent carcass tape windings. The further segment of the elongate tape provides a mating region for a portion of the carcass tape to locate into as the carcass tapes are compressed with the press roller 1250. The mating region may extend between the first portion of the elongate tape and the intermediate region.

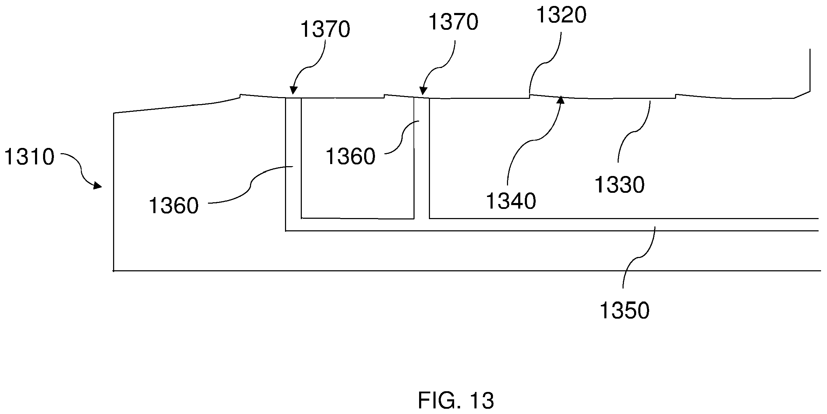

Figure 13 illustrates a further example of a shaft member 1310 for supporting an elongate tape during manufacture of flexible pipe body. The shaft member show in Figure 13 has a common cross section different to those illustrated in Figures 9 through 12. The common cross section of a helically extending variation 1330 in Figure 11 has a protruding portion 1320 that has a radially curved outwards surface 1340, extending from a constant radius cross section region to an abrupt radially inward step. Optionally, the inward step extends from a radially outer limit of the protruding portion1320 to the constant radius region, at around 90 degrees to the outer surface of the shaft member 1310. Alternatively, the inward step may extend from a radially outer limit of the protruding portion to the constant radius region at an angle less than 90 degrees to the outer surface of the shaft member. Regions of the common cross section of the helically extending variation may be adjacent to each other.

The protruding portion 1320 of the common cross section of the shaft member in Figure 13 helps tilt or bend an elongate tape because a first segment of the tape abuts a constant radius region of the shaft member, set back from the protruding portion and the radially curved outward surface 1340. whilst part of a remaining segment of the elongate tape abuts at least a portion of the radially curved outward surface 1340. This helps to provide the tapes at the oblique angle required for locating adjacent elongate tape windings on the outer surface of the shaft member.

For the avoidance of doubt, Figures 7 through 13 illustrate just one half of the cross section through an elongate shaft member and a portion of flexible pipe body. Also for the avoidance of doubt all of the shafts illustrated may optionally include one or more lubricating passageways 1350 that include one or more radially extending passages 1360 terminating in respective exit orifices 1370 that help lubricate an interface region between an outer surface of the shaft and a radially innermost surface of elements wound over the shaft. This helps release the windings from the shaft during manufacturing.

## Claims

1. Flexible pipe body (100, 300, 500, 700, 800, 1200), comprising:
a wound carcass tape element (310, 510, 710, 810, 1010, 1210) comprising a plurality of carcass windings, adjacent carcass windings being interlocked and providing a gap therebetween; and
a helically wound elongate tape element (320, 520, 720, 820, 1020, 1220), at least partially interposed between windings of the carcass tape element (310, 510, 710, 810, 1010, 1210), having a cross section comprising a first portion (330, 410, 530, 610), extending from a first free edge (430, 620) of the elongate tape element (320, 520, 720, 820, 1020, 1220) corresponding to a first end (420, 630, 1130) of the cross section, that is curved and at least partially extends into a first gap region (340, 540) that extends between two adjacent windings of the carcass tape, and a body portion (350, 460, 650), extending between the first portion (330, 410, 530, 610) and a remaining end (550, 645, 1140) of the cross section that corresponds to a remaining free edge (450, 640) of the elongate tape element, that bridges a further gap region (360, 570) extending between a one of the two adjacent windings and a further adjacent winding that is adjacent to said a one of the two adjacent windings of the carcass tape; wherein
the body portion (350, 460, 650) comprises an intermediate region (470, 560, 655, 840) that is curved and is located at least partially into the further gap region (360, 570).

2. The flexible pipe body (100, 300, 500, 700, 800, 1200) as claimed in claim 1, further comprising:
the first portion (330, 410, 530, 610) of the elongate tape element (320, 520, 720, 820, 1020, 1220) extends into the first gap region (340, 540) by a distance of between 10% to 50% of a total thickness of a winding of the carcass tape (310, 510, 710, 810, 1010, 1210).

3. The flexible pipe body (100, 300, 500, 700, 800, 1200) as claimed in either claim 1 or claim 2, wherein the remaining end (550, 645, 1140) of the elongate tape element (320, 520, 720, 820, 1020, 1220) cross section is upturned for locating at least partially towards a still further gap region, between the further adjacent winding a still further adjacent winding of the carcass tape (310, 510, 710, 810, 1010, 1210), and at least partially into a recessed region of an adjacent elongate tape element winding.

4. The flexible pipe body (100, 300, 500, 700, 800, 1200) as claimed in claim 3, wherein the curve of the remaining end (550, 645, 1140) of the elongate tape element cross-section at least partially matches the curve of the intermediate region (470, 560, 655, 840) and a curve of a carcass winding at a lift off point (590) as the carcass winding lifts away from a radially innermost extent.

5. The flexible pipe body (100, 300, 500, 700, 800, 1200) as claimed in any one of claims 1 to 4, further comprising:
an internal polymer barrier layer (110) that provides a fluid barrier and that has a radially inner surface that defines a fluid communicating bore; and
at least one armour layer (130, 140, 150) radially outside the barrier layer.

6. The flexible pipe body (100, 300, 500, 700, 800, 1200) as claimed in any one of claims 1 to 5, further comprising:
the carcass tape (310, 510, 710, 810, 1010, 1210) is a bent strip, having a uniform thickness across a cross section of the carcass windings, that is folded to provide adjacent windings that can be interlocked; and
the elongate tape element (320, 520, 720, 820, 1020, 1220) is a bent strip, having a uniform thickness across a cross section of the elongate tape, that is folded to provide a cross section comprising the first portion (330, 410, 530, 610) and the body portion (350, 460, 650).

7. The flexible pipe body (100, 300, 500, 700, 800, 1200) as claimed in any one of claims 1 to 6, further comprising:
a thickness of the cross section of the elongate tape element (320, 520, 720, 820, 1020, 1220) is no more than 60% of a thickness of the carcass tape (310, 510, 710, 810, 1010, 1210), and optionally the thickness of the elongate tape element is less than 35% of the thickness of the carcass tape.

8. The flexible pipe body (100, 300, 500, 700, 800, 1200) as claimed in any of claims 1 to 7, wherein an apex of the curve in the intermediate region (470, 560, 655, 840) of the elongate tape element (320, 520, 720, 820, 1020, 1220) extends into the further gap (360, 570) by a distance of between 5% and 15% of a total thickness of a winding of the carcass tape (310, 510, 710, 810, 1010, 1210).

9. The flexible pipe body (100, 300, 500, 700, 800, 1200) as claimed in any of claims 1 to 8, wherein the intermediate region (470, 560, 655, 840) comprises a single curve having a bell curve profile that has an apex that points away from a primary plane associated with said a cross section in a common direction to a direction in which the first portion (330, 410, 530, 610) turns away from the primary plane.

10. The flexible pipe body (100, 300, 500, 700, 800, 1200) as claimed in any of claims 1 to 9, wherein the remaining end (550, 645, 1140) of the elongate tape element (320, 520, 720, 820, 1020, 1220) cross section has a curved shape that mates with a shape of a turning region of the intermediate region (470, 560, 655, 840) as the intermediate region turns away from a primary plane associated with said a cross section to thereby enable the further curved end of a winding of the elongate tape element to nest in a recess under an associated intermediate region of an adjacent winding of the elongate tape element.

11. A method of manufacturing flexible pipe body (100, 300, 500, 700, 800, 1200), comprising the steps of:
helically winding an elongate tape element (320, 520, 720, 820, 1020, 1220) on an outer surface (740, 825, 930, 1050, 1320) of a mandrel member (730, 830, 900, 1030, 1230, 1310) thereby at least partially overlaying an overlying region of the elongate tape element of an incoming elongate tape element winding over a covered region of a preceding elongate tape element winding;
helically winding a carcass tape (310, 510, 710, 810, 1010, 1210) over the mandrel member thereby locating a portion of an incoming carcass winding over at least a region of an already wound winding of the elongate tape element (320, 520, 720, 820, 1020, 1220) thereby locating a curved first portion (330, 410, 530, 610) of a cross section of the elongate tape element in a first gap region (340, 540) that extends between two adjacent windings of the carcass tape (310, 510, 710, 810, 1010, 1210) and locating a body portion (350, 460, 650) of the elongate tape element bridging a further gap region (360, 570) extending between a one of the two adjacent windings and a further adjacent winding of the carcass tape that is adjacent to said a one of the two adjacent windings of the carcass tape; and
locating an intermediate region (470, 560, 655, 840) of the body portion (350, 460, 650) that is curved at least partially into the further gap region (360, 570).

## Patentansprüche

1. Flexibler Rohrkörper (100, 300, 500, 700, 800, 1200), umfassend:
ein gewickeltes Karkassenbandelement (310, 510, 710, 810, 1010, 1210), umfassend eine Vielzahl von Karkassenwicklungen, wobei benachbarte Karkassenwicklungen ineinandergreifen und einen Spalt dazwischen bereitstellen; und
ein schraubenförmig gewickeltes längliches Bandelement (320, 520, 720, 820, 1020, 1220), das mindestens teilweise zwischen Wicklungen des Karkassenbandelements (310, 510, 710, 810, 1010, 1210) eingefügt ist, das einen Querschnitt aufweist, umfassend einen ersten Abschnitt (330, 410, 530, 610), der sich von einer ersten freien Kante (430, 620) des länglichen Bandelements (320, 520, 720, 820, 1020, 1220) erstreckt, die einem ersten Ende (420, 630, 1130) des Querschnitts entspricht, der gekrümmt ist und sich mindestens teilweise in einen ersten Spaltbereich (340, 540) erstreckt, der sich zwischen zwei benachbarten Wicklungen des Karkassenbands erstreckt, und einen Körperabschnitt (350, 460, 650), der sich zwischen dem ersten Abschnitt (330, 410, 530, 610) und einem verbleibenden Ende (550, 645, 1140) des Querschnitts erstreckt, das einer verbleibenden freien Kante (450, 640) des länglichen Bandelements entspricht, der einen weiteren Spaltbereich (360, 570) überbrückt, der sich zwischen einer der zwei benachbarten Wicklungen und einer weiteren benachbarten Wicklung erstreckt, die der einen der zwei benachbarten Wicklungen des Karkassenbands benachbart ist; wobei
der Körperabschnitt (350, 460, 650) einen Zwischenbereich (470, 560, 655, 840) umfasst, der gekrümmt ist und der mindestens teilweise in dem weiteren Spaltbereich (360, 570) angeordnet ist.

2. Flexibler Rohrkörper (100, 300, 500, 700, 800, 1200) nach Anspruch 1, ferner umfassend:
der erste Abschnitt (330, 410, 530, 610) des länglichen Bandelements (320, 520, 720, 820, 1020, 1220) erstreckt sich in den ersten Spaltbereich (340, 540) um eine Distanz von zwischen 10 % bis 50 % einer Gesamtdicke einer Wicklung des Karkassenbands (310, 510, 710, 810, 1010, 1210).

3. Flexibler Rohrkörper (100, 300, 500, 700, 800, 1200) nach Anspruch 1 oder 2, wobei das verbleibende Ende (550, 645, 1140) des Querschnitts des länglichen Bandelements (320, 520, 720, 820, 1020, 1220) zum mindestens teilweisen Anordnen in Richtung eines noch weiteren Spaltbereichs zwischen der weiteren benachbarten Wicklung und einer noch weiteren benachbarten Wicklung des Karkassenbands (310, 510, 710, 810, 1010, 1210) und mindestens teilweise in einen vertieften Bereich einer benachbarten Wicklung des länglichen Bandelements nach oben gewandt ist.

4. Flexibler Rohrkörper (100, 300, 500, 700, 800, 1200) nach Anspruch 3, wobei die Krümmung des verbleibenden Endes (550, 645, 1140) des Querschnitts des länglichen Bandelements mindestens teilweise mit der Krümmung des Zwischenbereichs (470, 560, 655, 840) und einer Krümmung einer Karkassenwicklung an einem Abhebepunkt (590) übereinstimmt, wenn sich die Karkassenwicklung von einer radial innersten Ausdehnung abhebt.

5. Flexibler Rohrkörper (100, 300, 500, 700, 800, 1200) nach einem der Ansprüche 1 bis 4, ferner umfassend:
eine innere Polymersperrschicht (110), die eine Fluidsperre bereitstellt und die eine radial Innenoberfläche aufweist, die eine fluidleitende Bohrung definiert; und
mindestens eine Armierungsschicht (130, 140, 150) radial außerhalb der Sperrschicht.

6. Flexibler Rohrkörper (100, 300, 500, 700, 800, 1200) nach einem der Ansprüche 1 bis 5, ferner umfassend:
das Karkassenband (310, 510, 710, 810, 1010, 1210) ist ein gebogener Streifen, der eine gleichmäßige Dicke über einen Querschnitt der Karkassenwicklungen aufweist, der gefaltet ist, um benachbarte Wicklungen bereitzustellen, die ineinandergreifen können; und
das längliche Bandelement (320, 520, 720, 820, 1020, 1220) ist ein gebogener Streifen, der eine gleichmäßige Dicke über einen Querschnitt des länglichen Bandes aufweist, der gefaltet ist, um einen Querschnitt bereitzustellen, umfassend den ersten Abschnitt (330, 410, 530, 610) und den Körperabschnitt (350, 460, 650).

7. Flexibler Rohrkörper (100, 300, 500, 700, 800, 1200) nach einem der Ansprüche 1 bis 6, ferner umfassend:
eine Dicke des Querschnitts des länglichen Bandelements (320, 520, 720, 820, 1020, 1220) beträgt nicht mehr als 60 % einer Dicke des Karkassenbands (310, 510, 710, 810, 1010, 1210)t, und optional beträgt die Dicke des länglichen Bandelements weniger als 35 % der Dicke des Karkassenbands.

8. Flexibler Rohrkörper (100, 300, 500, 700, 800, 1200) nach einem der Ansprüche 1 bis 7, wobei sich ein Scheitelpunkt der Kurve in dem Zwischenbereich (470, 560, 655, 840) des länglichen Bandelements (320, 520, 720, 820, 1020, 1220) um eine Distanz zwischen 5 % und 15 % einer Gesamtdicke einer Wicklung des Karkassenbands (310, 510, 710, 810, 1010, 1210) in den weiteren Spalt (360, 570) erstreckt.

9. Flexibler Rohrkörper (100, 300, 500, 700, 800, 1200) nach einem der Ansprüche 1 bis 8, wobei der Zwischenbereich (470, 560, 655, 840) eine einzelne Kurve umfasst, die ein Glockenkurvenprofil aufweist, das einen Scheitelpunkt aufweist, der von einer primären Ebene, die mit dem Querschnitt verknüpft ist, in einer gemeinsamen Richtung zu einer Richtung weg zeigt, in der sich der erste Abschnitt (330, 410, 530, 610) von der primären Ebene abwendet.

10. Flexibler Rohrkörper (100, 300, 500, 700, 800, 1200) nach einem der Ansprüche 1 bis 9, wobei das verbleibende Ende (550, 645, 1140) des Querschnitts des länglichen Bandelements (320, 520, 720, 820, 1020, 1220) eine gekrümmte Form aufweist, die mit einer Form eines Wendebereichs des Zwischenbereichs (470, 560, 655, 840) zusammenpasst, wenn sich der Zwischenbereich von einer primären Ebene abwendet, die mit dem Querschnitt verknüpft ist, um dadurch zu ermöglichen, dass sich das weitere gekrümmte Ende einer Wicklung des länglichen Bandelements in eine Vertiefung unter einem zugehörigen Zwischenbereich einer benachbarten Wicklung des länglichen Bandelements einfügt.

11. Verfahren zum Herstellen eines flexiblen Rohrkörpers (100, 300, 500, 700, 800, 1200), umfassend die Schritte:
schraubenförmiges Wickeln eines länglichen Bandelements (320, 520, 720, 820, 1020, 1220) auf eine Außenoberfläche (740, 825, 930, 1050, 1320) eines Dornelements (730, 830, 900, 1030, 1230, 1310), wodurch ein darüberliegender Bereich des länglichen Bandelements einer ankommenden länglichen Bandelementwicklung mindestens teilweise über einen abgedeckten Bereich einer vorhergehenden länglichen Bandelementwicklung gelegt wird;
schraubenförmiges Wickeln eines Karkassenbands (310, 510, 710, 810, 1010, 1210) über das Dornelement, wodurch ein Abschnitt einer ankommenden Karkassenwicklung über mindestens einem Bereich einer bereits gewickelten Wicklung des länglichen Bandelements (320, 520, 720, 820, 1020, 1220) angeordnet wird, wodurch ein gekrümmter erster Abschnitt (330, 410, 530, 610) eines Querschnitts des länglichen Bandelements in einem ersten Spaltbereich (340, 540) angeordnet wird, der sich zwischen zwei benachbarten Wicklungen des Karkassenbands (310, 510, 710, 810, 1010, 1210) erstreckt, und Anordnen eines Körperabschnitts (350, 460, 650) des länglichen Bandelements, der einen weiteren Spaltbereich (360, 570) überbrückt, der sich zwischen einer der zwei benachbarten Wicklungen und einer weiteren benachbarten Wicklung des Karkassenbands erstreckt, die der einen der zwei benachbarten Wicklungen des Karkassenbands benachbart ist; und
Anordnen eines Zwischenbereichs (470, 560, 655, 840) des Körperabschnitts (350, 460, 650), der mindestens teilweise in den weiteren Spaltbereich (360, 570) gekrümmt ist.

## Revendications

1. Corps de tuyau flexible (100, 300, 500, 700, 800, 1200), comprenant :
un élément de bande de carcasse enroulé (310, 510, 710, 810, 1010, 1210) comprenant une pluralité d'enroulements de carcasse, des enroulements de carcasse adjacents étant imbriqués et formant un espace entre eux ; et
un élément de bande allongée enroulé en hélice (320, 520, 720, 820, 1020, 1220), au moins partiellement interposé entre des enroulements de l'élément de bande de carcasse (310, 510, 710, 810, 1010, 1210), ayant une section transversale comprenant une première partie (330, 410, 530, 610), s'étendant depuis un premier bord libre (430, 620) de l'élément de bande allongée (320, 520, 720, 820, 1020, 1220) correspondant à une première extrémité (420, 630, 1130) de la section transversale, qui est incurvée et s'étend au moins partiellement dans une première région d'espace (340, 540) qui s'étend entre deux enroulements adjacents de la bande de carcasse, et une partie de corps (350, 460, 650), s'étendant entre la première partie (330, 410, 530, 610) et une extrémité restante (550, 645, 1140) de la section transversale qui correspond à un bord libre restant (450, 640) de l'élément de bande allongée, qui enjambe une région d'espace supplémentaire (360, 570) s'étendant entre l'un des deux enroulements adjacents et un autre enroulement adjacent qui est adjacent audit un des deux enroulements adjacents de la bande de carcasse ; dans lequel
la partie de corps (350, 460, 650) comprend une région intermédiaire (470, 560, 655, 840) qui est incurvée et est située au moins partiellement dans la région d'espace supplémentaire (360, 570).

2. Corps de tuyau flexible (100, 300, 500, 700, 800, 1200) selon la revendication 1, comprenant en outre :
la première partie (330, 410, 530, 610) de l'élément de bande allongée (320, 520, 720, 820, 1020, 1220) s'étend dans la première région d'espace (340, 540) sur une distance entre 10 % et 50 % d'une épaisseur totale d'un enroulement de la bande de carcasse (310, 510, 710, 810, 1010, 1210).

3. Corps de tuyau flexible (100, 300, 500, 700, 800, 1200) tel que revendiqué dans l'une ou l'autre de la revendication 1 et de la revendication 2, dans lequel l'extrémité restante (550, 645, 1140) de la section transversale de l'élément de bande allongée (320, 520, 720, 820, 1020, 1220) est relevée pour se positionner au moins partiellement vers une autre région d'espace supplémentaire, entre l'enroulement adjacent supplémentaire un autre enroulement adjacent supplémentaire de la bande de carcasse (310, 510, 710, 810, 1010, 1210), et au moins partiellement dans une région évidée d'un enroulement d'élément de bande allongée adjacent.

4. Corps de tuyau flexible (100, 300, 500, 700, 800, 1200) selon la revendication 3, dans lequel la courbure de l'extrémité restante (550, 645, 1140) de la section transversale de l'élément de bande allongée correspond au moins partiellement à la courbure de la région intermédiaire (470, 560, 655, 840) et à une courbure d'un enroulement de carcasse au niveau d'un point de décollement (590) à mesure que l'enroulement de carcasse s'éloigne d'une étendue radialement la plus interne.

5. Corps de tuyau flexible (100, 300, 500, 700, 800, 1200) selon l'une quelconque des revendications 1 à 4, comprenant en outre :
une couche barrière polymère interne (110) qui fournit une barrière fluidique et qui présente une surface radialement interne qui définit un alésage de communication fluidique ; et
au moins une couche d'armure (130, 140, 150) radialement à l'extérieur de la couche barrière.

6. Corps de tuyau flexible (100, 300, 500, 700, 800, 1200) selon l'une quelconque des revendications 1 à 5, comprenant en outre :
la bande de carcasse (310, 510, 710, 810, 1010, 1210) est une bande cintrée, ayant une épaisseur uniforme sur une section transversale des enroulements de carcasse, qui est pliée pour fournir des enroulements adjacents pouvant être imbriqués ; et
l'élément de bande allongée (320, 520, 720, 820, 1020, 1220) est une bande cintrée, ayant une épaisseur uniforme sur une section transversale de la bande allongée, qui est pliée pour fournir une section transversale comprenant la première partie (330, 410, 530, 610) et la partie de corps (350, 460, 650).

7. Corps de tuyau flexible (100, 300, 500, 700, 800, 1200) selon l'une quelconque des revendications 1 à 6, comprenant en outre :
une épaisseur de la section transversale de l'élément de bande allongée (320, 520, 720, 820, 1020, 1220) n'est pas supérieure à 60 % d'une épaisseur de la bande de carcasse (310, 510, 710, 810, 1010, 1210), et éventuellement l'épaisseur de l'élément de bande allongée est inférieure à 35 % de l'épaisseur de la bande de carcasse.

8. Corps de tuyau flexible (100, 300, 500, 700, 800, 1200) selon l'une quelconque des revendications 1 à 7, dans lequel un sommet de la courbe dans la région intermédiaire (470, 560, 655, 840) de l'élément de bande allongée (320, 520, 720, 820, 1020, 1220) s'étend dans l'espace supplémentaire (360, 570) sur une distance entre 5 % et 15 % d'une épaisseur totale d'un enroulement de la bande de carcasse (310, 510, 710, 810, 1010, 1210).

9. Corps de tuyau flexible (100, 300, 500, 700, 800, 1200) selon l'une quelconque des revendications 1 à 8, dans lequel la région intermédiaire (470, 560, 655, 840) comprend une courbe unique ayant un profil en cloche qui présente un sommet qui pointe à l'opposé d'un plan principal associé à ladite section transversale dans une direction commune à une direction dans laquelle la première partie (330, 410, 530, 610) s'écarte du plan principal.

10. Corps de tuyau flexible (100, 300, 500, 700, 800, 1200) selon l'une quelconque des revendications 1 à 9, dans lequel l'extrémité restante (550, 645, 1140) de la section transversale de l'élément de bande allongée (320, 520, 720, 820, 1020, 1220) présente une forme incurvée qui correspond à une forme d'une région d'éloignement de la région intermédiaire (470, 560, 655, 840) à mesure que la région intermédiaire s'éloigne d'un plan principal associé à ladite une section transversale pour permettre de ce fait à l'autre extrémité incurvée d'un enroulement de l'élément de bande allongée de se nicher dans un évidement sous une région intermédiaire associée d'un enroulement adjacent de l'élément de bande allongée.

11. Procédé de fabrication d'un corps de tuyau flexible (100, 300, 500, 700, 800, 1200), comprenant les étapes consistant à :
enrouler de manière hélicoïdale un élément de bande allongée (320, 520, 720, 820, 1020, 1220) sur une surface extérieure (740, 825, 930, 1050, 1320) d'un élément de mandrin (730, 830, 900, 1030, 1230, 1310) superposant de ce fait au moins partiellement une région sus-jacente de l'élément de bande allongée d'un enroulement d'élément de bande allongée entrant sur une région couverte d'un enroulement d'élément de bande allongée précédent ;
enrouler de manière hélicoïdale une bande de carcasse (310, 510, 710, 810, 1010, 1210) sur l'élément de mandrin, positionnant de ce fait une partie d'un enroulement de carcasse entrant sur au moins une région d'un enroulement déjà enroulé de l'élément de bande allongée (320, 520, 720, 820, 1020, 1220), positionnant de ce fait une première partie incurvée (330, 410, 530, 610) d'une section transversale de l'élément de bande allongée dans une première région d'espace (340, 540) qui s'étend entre deux enroulements adjacents de la bande de carcasse (310, 510, 710, 810, 1010, 1210) et positionnant une partie de corps (350, 460, 650) de l'élément de bande allongée enjambant une région d'espace supplémentaire (360, 570) s'étendant entre l'un des deux enroulements adjacents et un enroulement adjacent supplémentaire de la bande de carcasse qui est adjacent audit un des deux enroulements adjacents de la bande de carcasse ; et
positionner une région intermédiaire (470, 560, 655, 840) de la partie de corps (350, 460, 650) qui est incurvée au moins partiellement dans la région d'espace supplémentaire (360, 570).
